# EUROPÄISCHE PATENTSCHRIFT

(11) **EP 1 376 041 B1**
(45) Veröffentlichungstag und Bekanntmachung des Hinweises auf die Patenterteilung: **11.09.2013**
(21) Anmeldenummer: 03014044.6
(22) Anmeldetag: 23.06.2003
(51) Int. Cl.: F28D 9/00, B23K 37/04

(54) **Verfahren zur Herstellung eines Schichtwärmeübertragers**
Process for manufacturing a stacked heat exchanger
Procédé de fabrication d'un échangeur de chaleur à empilage

(30) Priorität: 21.06.2002 DE 10227927
(43) Veröffentlichungstag der Anmeldung: 02.01.2004
(73) Patentinhaber: Behr GmbH & Co. KG, 70469 Stuttgart (DE)
(72) Erfinder: Angermann, Hans-H., dr. rer. nat., 70197 Stuttgart (DE); Damsohn, Herbert, Dr.-Ing., 73773 Aichwald (DE); Krumbach, Karl-Gerd, Dipl.-Ing., 71576 Burgstetten (DE)
(74) Vertreter: Grauel, Andreas

(56) Entgegenhaltungen:
- WO-A-01/87529
- FR-A- 2 702 978
- US-A- 1 662 870
- US-A- 2 961 222
- PATENT ABSTRACTS OF JAPAN Bd. 018, Nr. 203 (M-1590), 11. April 1994 (1994-04-11) -& JP 06 003076 A (TOYO RADIATOR CO LTD), 11. Januar 1994 (1994-01-11)

## Beschreibung

Die Erfindung betrifft ein Verfahren zur Herstellung eines Schichtwärmeübertragers nach dem Oberbegriff des Patentanspruches 1 und bekannt durch die DE-A 100 42 690 der Anmelderin.

Bei dem bekannten Schichtwärmeübertrager sind eine Vielzahl von profilierten Trennplatten und zwei abschlussseitige Deckplatten zu einem Schichtblock aufeinander geschichtet und stirnseitig verschweißt, und zwar durch Laserschweißnähte. Damit sind einerseits die Strömungskanalschichten für ein erstes und ein zweites Medium fluiddicht voneinander getrennt, anderseits ist der gesamte Stapel durch diese Schweißnähte mechanisch fixiert, d. h. die aufeinander geschichteten Trenn- und Deckplatten bilden einen festen Block. An die vier offenen Seiten dieses Blockes werden Sammelkästen fluiddicht angeschweißt, so dass sich ein Kreuzstrom-Schichtwärmeübertrager ergibt. Nachteilig bei dieser Schweißkonstruktion ist, dass der Schichtblock bzw. die Trennplatten nur stirnseitig, d. h. am Rande miteinander verschweißt sind. Bei höheren Temperaturen und/oder Innendrücken in den Strömungskanalschichten können die Platten daher ausbeulen, da ihnen hier die erforderliche Festigkeit bzw. Stabilität fehlt. Im Falle von hohen wechselnden Innendrücken können die Schweißnähte außen durch Bildung von Ermüdungsrissen versagen, da die Bleche wegen der fehlenden fügetechnischen Verbindung über ihren gesamten strukturierten Bereich im Inneren des Schichtblockes in besonderem Maße beweglich sind. In sofern wäre eine Verlötung der Trennbleche untereinander vorteilhaft, um eine Zugankerwirkung und damit eine Steigerung der Festigkeit zu erzielen. Für das Löten des Blockes ist jedoch herkömmlicherweise eine separate Lötvorrichtung notwendig, die die Platten gegeneinander verspannt und in ihrer Lage fixiert. Nach dem Löten wird der Schichtblock aus der Lötvorrichtung entnommen, die dann für die nächste Lötung verwendet wird. Ein solches Fertigungsverfahren ist aufwändig, zumal die Lötvorrichtung wegen Materialalterung nach bestimmten Zeiten ersetzt werden muss.

Durch die DE-A 198 15 218 der Anmelderin wurde ein Schichtwärmeübertrager bekannt, bei dem der Schichtblock bzw. Stapel und das den Stapel aufnehmende Gehäuse in einem Arbeitsgang gelötet werden (so genannte Kompiettlötung). Eine solche Komplettlötung setzt jedoch ein fertiges, z. B. gegossenes Gehäuse voraus, in welches der Schichtblock zwecks Lötung verbracht werden kann. Ein solches fertiges Gehäuse ist bei geringeren Stückzahlen weniger rentabel, d. h. bei Änderungen der Blockabmessungen ist auch ein neues Gehäuse erforderlich.

Die JP06003076 offenbart einen Schichtwärmeübertrager, der im Wesentlichen aus aufeinander geschichteten Trenn- und Deckplatten sowie Sammelkästen aufgebaut ist, wobei die Sammelkästen sowohl mit den Deckplatten als auch mit den Trennplatten verschweißt sind.

Es ist Aufgabe der vorliegenden Erfindung, ein Verfahren zur Herstellung des eingangs erwähnten Schichtwärmeübertragers aufzuzeigen, welches mit geringeren Fertigungskosten und Vorrichtungsaufwand verbunden ist, und einen Schichtwärmeübertrager der eingangs genannten Art hinsichtlich seiner Fertigung, Herstellungskosten und mechanischen Eigenschaften zu verbessern.

Die Lösung dieser Aufgabe ergibt sich aus den Merkmalen des Patentanspruchs 1. Der wesentliche Vorteil des erfindungsgemäßen Verfahrens besteht darin, dass der fertig gestapelte Schichtblock bzw. Stapel insbesondere zunächst verspannt und dann mechanisch fixiert wird, beispielsweise in einer speziellen Vorrichtung. Der Block kann dann der Vorrichtung entnommen und gelötet werden. Nach der Lötung verfügt er über eine erhöhte Innendruckfestigkeit. Die Vorrichtung wird somit nicht der Löt-Temperaturbehandlung unterworfen und altert dadurch auch nicht. Das mechanische Fixieren vor dem Löten erfolgt durch Kleben oder Schweißen, wobei hier mehrere Alternativen bestehen.

Erfindungsgemäß werden die Verfahrensschritte "mechanisches Fixieren" und "Verschweißen der Sammelkästen" (Merkmale c und e) zu einem Arbeitsgang zusammengefasst. Die Sammelkästen werden mit ihren Rändern an den Kanten des Schichtblockes angeschweißt, wobei auch ein Punktieren oder Heftschweißen ausreichend sein kann. Das Anheften hat den Vorteil, dass der Wärmeeintrag in das Kastenblech nicht so groß ist wie beim Anschweißen über die gesamte Länge der senkrecht verlaufenden Kanten, wodurch der Verzug des Kastenblechs und gegebenenfalls auch der Trennbleche verringert wird. Der Schichtblock wird dann mit den angeschweißten/angehefteten Sammelkästen in den Lötofen verbracht und dort mit den Sammelkästen verlötet. Letztere stellen somit eine verlorene Lötvorrichtung dar. Das Anschweißen/Anheften kann mit den üblichen Schweißverfahren wie WIG- oder MikroWIG-Schweißen, Laserschweißen etc. geleistet werden. Im Falle, dass die Sammelkästen nur geheftet waren, kann die Dichtschweißung nach dem Löten erfolgen. Vorzugswelse wird der Kasten jedoch mit dem Block während des Lötens verbunden, und zwar entweder dadurch, dass überschüssiges Lot aus dem Blockbereich in den Spalt zwischen Kasten und Block fließt, oder dadurch, dass zwischen Kasten und Block vor dem Anheften mindestens eine Lotfolie platziert wird, die während des Lötens den Spalt zwischen Kasten und Block füllt. Die Lotfolie kann vollflächig ausgebildet sein oder die geometrische Form eines Rahmens haben. Eine weitere Möglichkeit ist es, nach dem Anheften der Kästen Lot, z. B. in Form einer Lotpaste, -band oder -folie auf die Spalte zwischen Kasten und Block aufzubringen, so dass während des Lötvorganges dieses extern angebrachte Lot in die Spalte fließt.

Erfindungsgemäß werden die Sammelkästen lediglich mit den Deckplatten des Schichtblocks verschweißt. Eine dichte Verbindung der Trennplatten untereinander erfolgt noch nicht. Beispielsweise werden Kanten des Stapels vor einem Lötvorgang mit Lotpaste, Lottape, Lotfolie oder ähnlichem belegt, so daß nach dem Lötvorgang eine ausreichende Dichtheit sowohl des Trennplattenstapels im Inneren als auch zwischen dem Stapel und den Sammelkästen erzielt wird. Dies hat den Vorteil, daß der zu lötende Stapel keine Balligkeit aufweist, die durch eine Schrumpfung von Schweißnähten entsteht und durch hohe Gewichtsauflage während des Lötvorgangs kompensiert werden muß.

Nach einer weiteren vorteilhaften Ausgestaltung der Erfindung wird der Schichtblock durch eine form- und kraftschlüssige Verbindung mit einem so genannten Stülpkasten fixiert - für diesen Zweck sind die Sammelkästen mit Laschen versehen, die den Schichtblock umgreifen und zusammenhalten. Die Stülpkästen können zum Löten mit dem Schichtblock geheftet oder verschweißt werden.

Erfindungsgemäß wird ein Schichtwärmeübertrager mit einem gelöteten Schichtblock und angeschweißten Sammelkästen geschaffen. Damit ergeben sich ein Block mit hoher Innendruckfestigkeit und ein Wärmeübertrager, der ohne wesentlichen Mehraufwand an unterschiedliche Blockabmessungen angepasst werden kann. Das Anschweißen von unterschiedlichen Stutzen ist bei niedrigen Stückzahlen günstiger als ein komplett neues Gehäuse. Durch die Einsparung einer Lötvorrichtung werden die Herstellkosten gesenkt. Da das Schweißen vor dem Löten erfolgt, werden die Schweißnähte durch die anschließende Wärmebehandlung von Spannungen befreit, und eventuelle Schweißnahtundichtigkeiten können dadurch beseitigt werden, dass Lot in die kapillarähnlichen Schweißnahtrisse gezogen wird.

In weiterer Ausgestaltung ist zwischen dem Schichtblock und den Sammelkästen jeweils ein Rahmen eingeschweißt, der als verlorene Lötvorrichtung zum Fixieren des Schichtblockes verwendet wird. Diese Lösung hat auch den Vorteil, dass die mit den Sammelkästen zu verschweißende Seite des Rahmens frei von Lotrückständen gehalten werden kann, die eine Verschweißung beeinträchtigen würden (z. B. ein Nickel-Lot). Dadurch, dass der Block geeignet mechanisch vorgespannt wird und durch vertikale Schweißnähte oder Anheften/Anpunkten von Kanten mechanisch fixiert ist, ist ein Pressen durch Gewichtsauflage oder durch eine Spannvorrichtung unter Umständen nicht notwendig. Auf die Löthilfsmittel Pressen und/oder Spannen kann daher verzichtet werden.

Als Materialien für den Block und die Kästen kommen alle Metalle in Frage wie Aluminium (Al) und Al-Legierungen, Kupfer (Cu) und Cu-Legierungen, Tantal (Ta) und Ta-Legierungen, Titan (Ti) und Ti-Legierungen, und insbesondere Edelstähle. Die Lotmaterialien sind üblicherweise an die Grundwerkstoffe angepasst, wie beispielsweise die Verwendung von Cu-, Au-, Ag- oder Ni-Loten für Edelstahl-Wärmaübartrager.

Zur Verhinderung von Oxidbildung während des Schweißvorgangs ist es möglich, lokal Formiergas an die Schweißnaht zu führen oder den gesamten Schichtblock einer Formiergasatmosphäre auszusetzen. Der Schweißvorgang selbst kann manuell oder automatisch ausgeführt werden.

Ein Ausführungsbeispiel eines Schichtwärmeübertragers ist in der Zeichnung dargestellt und wird im Folgenden näher beschrieben. Es zeigen
- Fig. 1: eine Draufsicht auf einen Kreuzstrom-Schichtwärmeübertrager mit einem Stapel quadratischer Trennplatten,
- Fig. 2: einen Längsschnitt in der Ebene II-II gemäß Fig. 1,
- Fig. 3: den Schichtwärmeübertrager in Explosivdarstellung,
- Fig. 3a: den zugehörigen Stapel von Trenn- und Deckplatten,
- Fig. 4: einen Schichtwärmeübertrager in Explosivdarstellung mit so genannten Stülpkästen und
- Fig. 4a: den zugehörigen Stapel von Trenn- und Deckplatten.

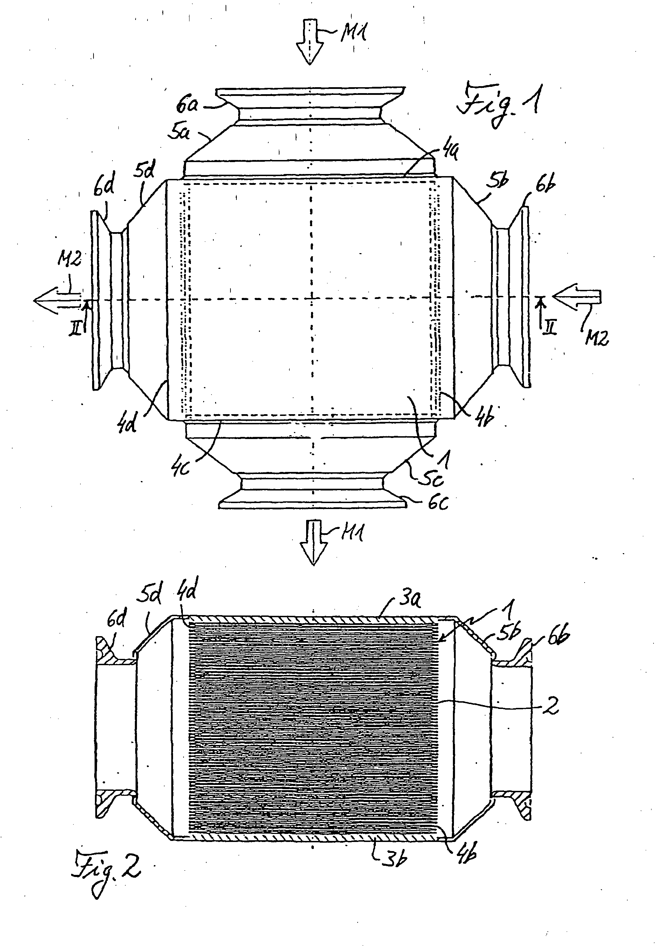

**Fig. 1** und **Fig. 2** zeigen in Draufsicht und im Längsschnitt einen Kreuzstrom-Schichtwärmeübertrager, der einen Schichtblock bzw. Stapel 1 aus viereckigen (quadratischen) Trennplatten 2 zwischen zwei stapelendseitigen Deckplatten 3a, 3b aufweist. An den vier Seitenflächen 4a, 4b, 4c, 4d des quader- oder würfelförmigen Trennplattenstapels 1 ist je ein Sammelkasten 5a, 5b, 5c, 5d mit zugehörigen Anschlußstutzen 6a, 6b, 6c, 6d angefügt. Jeder Sammelkasten 5a - 5d umschließt die gesamte zugehörige Stapelseitenfläche 4a - 4d. Die Trennplatten sind - wie später noch ausgeführt wird - profiliert und bilden Strömungskanäle bzw. Strömungskanalschichten (nicht dargestellt), durch welche ein erstes flüssiges oder gasförmiges Wärmetauschmedium M1, M2 strömt. Die beiden Medien M1, M2 durchströmen den Schichtblock 1 im Kreuzstrom, und zwar in abwechselnden Strömungskanalschichten.

Die Trennplatten 2 bestehen aus einer lötbaren Legierung, z. B. Edelstahl und können mit einer nicht dargestellten Lotschicht, z. B. Nickel- oder Kupferlot versehen sein.

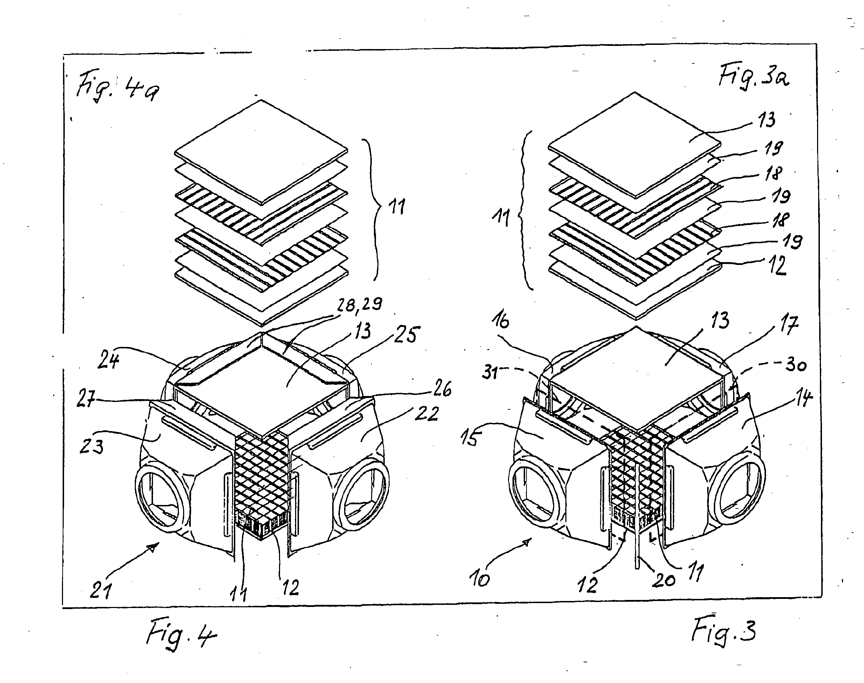

**Fig. 3** zeigt einen ähnlichen Kreuzstrom-Schichtwärmeübertrager 10 in Explosivdarstellung; er besteht aus einem teilweise dargestellten Schichtblock 11 mit einer unteren Deckplatte 12 und einer oberen Deckplatte 13. Der Stapel 11 weist vier Stimflächen auf, denen jeweils Sammelkästen 14, 15, 16, 17 zugeordnet sind.

**Fig. 3a** zeigt den Schichtblock 11 in Explosivdarstellung vor dem Löten. Der Stapel 11 wird nach unten durch die Deckplatte 12 und nach oben durch die Deckplatte 13 abgeschlossen, die beide Teil des fertigen Gehäuses des Wärmeübertragers 10 sind. Zwischen den Deckplatten 12, 13 sind in einer Richtung profilierte quadratische Trennplatten 18 angeordnet, die wechselweise jeweils um 90° um ihre Hochachse gedreht sind, so dass sich senkrecht zueinander verlaufende Profilrichtungen bzw. Strömungsbahnen ergeben. Zwischen den Trennplatten 18 sind Lotfolien 19 angeordnet; sie sind relativ dünn und bestehen beispielsweise aus einer kupfer- oder nickelhaltigen Lotlegierung, d. h. abgestimmt auf den Werkstoff der Trennplatten 18. Altemativ ist es natürlich auch möglich, dass das Lot galvanisch auf die Bleche aufgebracht wurde, eine Lotpaste beispielsweise mittels eines Siebdruck-, eines thermischen oder eines nichtthermischen Spritzverfahrens aufgebracht wurde oder die Bleche mit dem Lot vorher plattiert wurden.

Die Herstellung des Schichtwärmeübertragers 10 erfolgt in folgender Weise: Der Stapel 11, bestehend aus den erwähnten Elementen 12, 13, 18, 19 wird in einer nicht dargestellten Kassettiervorrichtung komplettiert und verspannt. Danach erfolgt die Fixierung des Stapels 11, und zwar nach einer ersten Variante in der Weise, dass eine Klebe- oder Schweißnaht 20 (schematisch dargestellt) an mindestens zwei Kanten des Blockes 11 gelegt wird. Diese Klebe- oder Schweißnaht 20 kann von der oberen Deckplatte 13 bis zur unteren Deckplatte 12 verlaufen, sie kann auch unterbrochen oder gepunktet sein. Damit ist der Schichtblock 11 hinreichend mechanisch fixiert und kann gelötet, d. h. in einen nicht dargestellten Lötofen verbracht werden. Beim Löten wird das Lot, bei diesem Ausführungsbeispiel die Lotfolien 19, aufgeschmolzen und bewirkt ein Verlöten der Trenn- und Deckplatten 12, 18, 13. Nach dem Löten werden die Sammelkästen 14, 15, 16, 17 an den gelöteten Block 11 angeschweißt, so dass sich ein fluiddichtes Gehäuse für den Schichtwärmeübertrager 10 ergibt.

Nach einer zweiten Variante werden - anstelle der Klebe- oder Schweißnähte 20 - die Sammelkästen 14 bis 17 selbst mit dem Schichtblock 11 verschweißt, so dass der Schichtblock 11 durch die Schweißverbindungen mit den Sammelkästen 14 bis 17 mechanisch fixiert ist. Der Block 11 wird dann zusammen mit den Sammelkästen 14 bis 17 im Lötofen gelötet. Dabei fungieren die Sammelkästen 14 bis 17 (möglicherweise auch nur zwei Sammelkästen 14, 16) als Lötvorrichtung, d. h. als eine verlorene Lötvorrichtung, da sie anschließend nicht wieder als Lötvorrichtung, sondern bestimmungsgemäß als Sammelkästen für den Wärmeübertrager 10 fungieren. Da das Löten nach dem Schweißen erfolgt, können eventuelle Undichtigkeiten oder Lücken in den Schweißnähten durch flüssiges Lot während des Lötprozesses ausgefüllt und damit abgedichtet werden.

Erfindungsgemäß werden die Sammelkästen 14 bis 17 lediglich mit den Deckplatten 12, 13 verschweißt. Die Kante 20 wird nicht verschweißt, sondern vor dem Löten mit Lotpaste belegt. Die Lotpaste kann dabei aus der gleichen Legierung bestehen wie die Lotfolie. Die Lotpaste kann auch aus einer Lotlegierung bestehen, die einen niedrigeren Schmelzbereich aufweist als die Lotfolie. Da der Schichtblock bei dieser Variante keine Balligkeit wegen einer Schrumpfung einer geschweißten Kante 20 aufweist, kann der Schichtblock mit wenig oder ohne Gewichtsauflage gelötet werden.

Nach einer dritten Variante werden zunächst die Klebe- oder Schweißnähte 20 angebracht und dann die Kästen auf den vorfixierten Block mittels MikroWlG oder wegen geringerem Wärmeeintrag vorzugsweise mit einem Laser aufgepunktet. Da es das Ziel ist, die angepunkteten Kästen gasdicht aufzulöten, können sich zwischen Kasten und Block eine oder mehrere Lotfolien befinden, oder das Lot wird in Form einer Paste oder eines Bandes, den Spalt zwischen Kasten und Block überdeckend, aufgebracht. Eventuell reicht auch der Nachfluss von Lot aus dem Block in den Spalt aus, diesen ohne zusätzliches Lot zu füllen.

**Fig. 4** zeigt eine weitere Ausführungsform für einen Schichtwärmeübertrager 21, bei welchem die Sammelkästen als sogenannte Stülpkästen 22, 23, 24, 25 ausgebildet sind. Der Schichtblock 11 entspricht in seinem gesamten Aufbau dem Ausführungsbeispiel gemäß Fig. 3, daher werden auch dieselben Bezugszahlen verwendet. Die Stülpkästen 22 bis 25 weisen an ihrer der Deckplatte 13 zugewandten Seite jeweils Laschen 26, 27, 28, 29 auf, die sich beim Fügen von Schichtblock 11 und Stülpkästen 22 bis 25 über die obere Deckplatte 13 schieben und diese umgreifen. In analoger Weise sind an der der unteren Deckplatte 12 zugewandten Seite der Stülpkästen 22 bis 25 ebenfalls (nicht dargestellte bzw. nicht sichtbare) Laschen angeordnet, so dass der Schichtblock 11 von oben und unten von Laschen übergriffen und damit zusammen gehalten, dass heißt mechanisch fixiert wird. Um diese Fixierung - als Vorbereitung für die anschließende Lötung - zu verstärken bzw. zu sichern, können die Laschen 26 bis 29 mit der Deckplatte 13 geheftet werden; eine analoge Heftung kann an der Unterseite mit der unteren Deckplatte 12 erfolgen. Nachdem der Block 11 und die Stülpkästen 22 bis 25 somit mechanisch fixiert sind, wird der gesamte Wärmeübertrager 21 im Lötofen gelötet. Nach dem Lötprozess erfolgt die Dichtschweißung der Sammelkästen, sofern nicht bereits vor dem Löten eine Komplettschweißung erfolgt ist. Letzteres hätte - wie bereits erwähnt - den Vorteil, dass eventuelle Risse oder Poren in der Schweißnaht durch Lot geschlossen würden.

Eine weitere Variante der mechanischen Fixierung des Schichtblockes 11 ist in **Fig. 3** dargestellt: Anstelle der oben beschriebenen Fixierung mittels der Sammelkästen 14 bis 17 kann die Fixierung auch durch gestrichelt dargestellte Rahmen 30, 31 erfolgen. Bei diesen Rahmen 30, 31, die nur schematisch und unvollständig dargestellt sind, können vier Metallleisten zu einem Rahmen gefügt werden, der den Abmessungen des Schichtblockes 11 und denen der Sammelkästen 14 bis 17 entspricht. Alternativ kann ein Rahmen auch bereits zusammenhängend durch Stanzen aus einem Blech hergestellt werden. Nachdem der Schichtblock 11 fertig gestapelt und verspannt ist, werden die Rahmen 30, 31 sowie optional zwei weitere nicht dargestellte auf die vier Seiten des Schichtblockes 11 aufgeschweißt. Nach dieser Schweißung ist der Schichtblock 11 mechanisch fixiert und kann gelötet werden. Nach dem Löten können beide Strömungskanäle dieses Blocks beschichtet werden, z. B. mit einer katalytischen Substanz, wie sie für einen Reaktor bei Brennstoffzellenantrieben benötigt wird. Wenn nur ein Strömungskanal beschichtet werden soll, müssen natürlich auch nur zwei Rahmen aufgeschweißt werden. Anstatt der weiteren zwei Rahmen können - wie oben beschrieben - direkt zwei Kästen aufgeschweißt/aufgepunktet werden. Nach erfolgter Beschichtung werden die Sammelkästen 14 bis 17 auf die Rahmen 30, 31 aufgeschweißt. Das Zwischensetzen von Rahmen zwischen den Schichtblock 11 und die Sammelkästen 14 bis 17 hat auch den Vorteil, dass die Rahmen in den Bereichen, wo die Schweißnähte zu den Sammelkästen gelegt werden, frei von Lot gehalten werden können, weil die Präsenz von Lot, z. B. Kupfer oder Nickel die Schweißnaht beeinträchtigen würde.

Natürlich sind neben den hier beispielhaft dargestellten Kreuzstrom-Wärmeübertragern auch Parallelstrom-Wärmeübertrager mit dem beschriebenen Verfahren fertigbar.

## Patentansprüche

1. Verfahren zur Herstellung eines Schichtwärmeübertragers (10), der im Wesentlichen aus aufeinander geschichteten Trenn- und Deckplatten (12, 18, 13) sowie Sammelkästen (14, 15, 16, 17) aufgebaut ist und folgende Verfahrensschritte aufweisend:
a) Stapeln der Trenn- und Deckplatten (12, 18, 13) zu einem Schichtblock (11),
b) Deponieren von Lot (19) auf oder zwischen den Trenn- und Deckplatten (12, 18, 13),
c) mechanisches Fixieren des Schichtblockes (11) durch Verschweißen,
d) Löten des Schichtblockes (11),
e) Verschweißen der Sammelkästen (14, 15, 16, 17) mit dem Schichtblock (11)
wobei das Fixieren gemäß Merkmal c) und das Verschweißen gemäß Merkmal e) in einem gemeinsamen Verfahrensschritt erfolgen, wobei die Trennplatten (18) nicht miteinander verschweißt werden,
**dadurch gekennzeichnet, dass** die Sammelkästen (14, 15, 16, 17) lediglich mit den Deckplatten (12, 13) verschweißt werden und Kanten (20) des Schichtblockes (11) vor dem Löten mit Lotpaste, Lottape oder Lotfolie belegt werden und das Löten des Schichtblockes (11) gemäß Merkmal d) ohne Pressen und ohne Spannen des Schichtblockes (11) erfolgt.

2. Verfahren nach Anspruch 1, **dadurch gekennzeichnet, dass** das Verschweißen durch Punktieren bzw. Heftschweißen erfolgt.

3. Verfahren nach einem der vorhergehenden Ansprüche, **dadurch gekennzeichnet, dass** der Schichtblock (11) nach dem Löten beschichtet, insbesondere katalytisch beschichtet wird und insbesondere anschließend mit den Sammelkästen (14, 15, 16, 17) verschweißt wird.

4. Verfahren nach einem der vorhergehenden Ansprüche, **dadurch gekennzeichnet, dass** das Fixieren mittels so genannter Stülpkästen (22, 23, 24, 25) erfolgt, die über den Schichtblock (11) gestülpt werden und den Schichtblock (11) form- und/oder kraftschlüssig umgreifen.

5. Verfahren nach Anspruch 4, **dadurch gekennzeichnet, dass** die Stülpkästen (22, 23, 24, 25) mit dem Schichtblock (11) punktiert bzw. geheftet werden.

## Claims

1. A process for manufacturing a stacked heat exchanger (10), which is essentially composed of separator and cover plates (12, 18, 13) that are layered on top of one another and header boxes (14, 15, 16, 17), comprising the following method steps:
a) stacking the separator and cover plates (12, 18, 13) to form a layer block (11);
b) depositing brazing filler material (19) on or between the separator and cover plates (12, 18, 13);
c) mechanically fixing the layer block (11) by way of welding;
d) brazing the layer block (11);
e) welding the header boxes (14, 15, 16, 17) to the layer block (11);
with the fixation according to feature c) and the welding operation according to feature e) being carried out in a common method step, the separator plates (18) not being welded to each other, **characterized in that** the header boxes (14, 15, 16, 17) are only welded to the cover plates (12, 13) and, prior to brazing, a brazing paste, brazing tape or brazing foil is applied to the edges (20) of the layer block (11), and the brazing operation of the layer block (11) according to feature d) is carried out without pressing and without tensioning the layer block (11).

2. The method according to claim 1, **characterized in that** the welding operation is carried out by way of spot welding or tack welding.

3. A method according to any one of the preceding claims, **characterized in that** the layer block (11) is coated after brazing, in particular catalytically coated, and in particular is then welded to the header boxes (14, 15, 16, 17).

4. A method according to any one of the preceding claims, **characterized in that** the fixation is carried out by way of so-called slip-on boxes (22, 23, 24, 25), which are slipped over the layer block (11) and positively and/or non-positively surround the layer block (11).

5. The method according to claim 4, **characterized in that** the slip-on boxes (22, 23, 24, 25) are spot-welded or tack-welded to the layer block (11).

## Revendications

1. Procédé de fabrication d'un échangeur de chaleur du type à empilage (10) qui est constitué essentiellement de plaques de séparation et de recouvrement (12, 18, 13) empilées les unes sur les autres, ainsi que de bacs collecteurs (14, 15, 16, 17), et présentant les étapes de procédé qui suivent, consistant:
a) à empiler les plaques de séparation et de recouvrement (12, 18, 13) pour former un bloc à empilage (11),
b) à déposer un métal d'apport de brasage (19) sur ou entre les plaques de séparation et de recouvrement (12, 18, 13),
c) à fixer mécaniquement, par soudage, le bloc à empilage (11),
d) à braser le bloc à empilage (11),
e) à souder les bacs collecteurs (14, 15, 16, 17) au bloc à empilage (11),
où la fixation conformément à la caractéristique c) et le soudage conformément à la caractéristique e) se produisent au cours d'une étape de procédé commune, où les plaques de séparation (18) ne sont pas soudées ensemble, **caractérisé en ce que** les bacs collecteurs (14, 15, 16, 17) sont simplement soudés aux plaques de recouvrement (12, 13), et des bords (20) du bloc à empilage (11) sont, avant le brasage, enrobés avec de la pâte à braser, avec une bande à braser ou avec une feuille à braser, et le brasage du bloc à empilage (11) conformément à la caractéristique d) se produit sans compression ni serrage du bloc à empilage (11).

2. Procédé selon la revendication 1, **caractérisé en ce que** le soudage effectué est un soudage par points ou un soudage à épinglage.

3. Procédé selon l'une ou l'autre des revendications précédentes, **caractérisé en ce que** le bloc à empilage (11), après le brasage, est recouvert, en particulier recouvert catalytiquement et, en particulier, soudé ensuite aux bacs collecteurs (14, 15, 16, 17).

4. Procédé selon l'une quelconque des revendications précédentes, **caractérisé en ce que** la fixation est réalisée au moyen de bacs dits retournés (22, 23, 24, 25) qui sont retournés sur le bloc à empilage (11) et entourent le bloc à empilage (11) par complémentarité de forme et/ou par action de force.

5. Procédé selon la revendication 4, **caractérisé en ce que** les bacs retournés (22, 23, 24, 25) sont fixés au bloc à empilage (11), par une fixation par points ou par une fixation à épinglage.
